# EUROPEAN PATENT APPLICATION

(11) **EP 1 973 225 A1**
(43) Date of publication of application: **24.09.2008**
(21) Application number: 08156372.8
(22) Date of filing: 25.02.2005
(51) Int. Cl.: H02P 3/04, H02P 25/02

(54) **Magnetic brake for powered window covering**

(30) Priority: 25.02.2004 US 786351
(62) Divisional of application: 05708599.5
(71) Applicant: Somfy SAS, 74300 Cluses (FR)
(72) Inventor: Cavarec, Pierre-Emmanuel, 74300 Magland (FR); Walker, Winston, Glenn, Littleton, CO 80120 (US)
(74) Representative: Bugnion Genève

(57) **Abstract**

A DC motor includes a motor housing inside of which a rotor may rotate and a braking magnet. The braking magnet is closely juxtaposed with the motor such that the rotor and the braking magnet are magnetically coupled.

## Description

### I. Field of the Invention

The present invention relates generally to motorized window coverings, awnings, security screens, projection screens, and the like.

### II. Background of the Invention

The present assignee has provided several systems for either lowering or raising a window covering, or for moving the slats of a window covering between open and closed positions, under control of a hand-held remote or other control device. These systems include a motor that is coupled through gears to the window covering activation mechanism. When the motor is energized in response to a user command signal, the activation mechanism moves the window covering. Such assemblies are disclosed in U.S. Patent No. 6,433,498, incorporated herein by reference.

The present assignee has also provided systems for determining the position of the window coverings based on counting motor pulses, and for braking the motor from turning when it is not energized. By knowing the position of the window coverings, features such as automatic repositioning the window covering to a preset position can be provided. These systems have drawbacks. The amplitude of the signal is dependent on the motor speed.

The aim of the invention is to provide a device for determining features of the movement of a movable element that allows the aforementioned drawbacks to be overcome and that provides an improvement with respect to the known devices of the state of the art. In particular, the invention allows to output a signal permitting to determine features of the movement and the amplitude of which is substantially independent of the motor speed. The invention also relates to a powered assembly.

### SUMMARY OF THE INVENTION

A DC motor according to the invention is defined by claim 1.

Various embodiments of the device are defined by dependent claims 2 to 4.

A powered assembly according to the invention is defined by independent claim 5.

An embodiment of the assembly is defined by dependent claim 6.

A method according to the invention is defined by claim 7.

Various embodiments of the method are defined by dependent claims 8 to 9.

In an other aspect, a powered assembly includes an object that can be moved between a first configuration and a second configuration. The object may be selected from the group consisting of window coverings, awnings, skylight coverings, curtains, and screens. A motor is provided, and an actuator is coupled to the motor and the object to move the object when the motor is energized. The motor turns a rotating member. At least one magnet is juxtaposed with the rotating member and is magnetically coupled thereto. Also, at least one piezosensitive element cooperates with the magnet to output signals when the rotating member rotates. The signals are useful in determining at least one of: a position, and a speed of rotation, of the motor. Advantageously, the magnet magnetically brakes the rotating member from turning when the motor is deenergized.

In a preferred embodiment, when the direction of rotation of the motor is not known a priori from, e.g., a user command signal of "OPEN" or "CLOSE", the assembly can include a second magnet and a second piezosensitive element interposed between the rotating member and second magnet and oriented in quadrature with the first piezosensitive element. In another embodiment, an elongated asymmetric ferromagnetic shaft can be coupled to a rotor of the motor by a vibration damping member, with the piezosensitive element being juxtaposed with the shaft and hence being shielded from motor vibrations.

In another aspect, a drive assembly for a movable object including a rod includes an electrically-powered drive structure couplable to the rod to move the object when the drive structure is energized. The drive structure has a rotating member. At least one braking magnet is closely spaced from the rotating member, and a piezosensitive element is juxtaposed with the magnet for generating a signal as the rotating member moves past the magnet. The signal is representative at least of a position of the rotating member. Preferably, at least a part of the rotating member contains ferromagnetic material.

In yet another aspect, a method is disclosed for operating an object that can be moved between a first configuration and a second configuration. The object is selected from the group consisting of window coverings, awnings, skylight coverings, curtains, and screens. The method includes providing a drive structure, coupling the drive structure to the object such that the object is moved when the drive structure is energized, and closely juxtaposing at least one magnet with the drive structure. The method also includes using the magnet to brake the drive structure when the drive structure is not energized, and piezosensitively generating signals when the drive structure rotates past the magnets to determine at least one of: a position of the drive structure, and a speed of the drive structure.

The determining of a position of the drive structure may be, at least in part, based on an amplitude of a signal from a piezosensitive element.

The determining of a speed of rotation of the drive structure may be, at least in part, based on a frequency of a signal from a piezosensitive element.

The method may comprise the providing of two piezosensitive elements outputting respective signals and using the signals to determine a direction of rotation of the drive structure.

The method may comprise the attenuating of motor vibrations transmitted to a piezosensitive element.

The method may comprise the powering of the object solely by means of at least one primary dc battery.

The details of the present invention, both as to its construction and operation, can best be understood in reference to the accompanying drawings, in which like numerals refer to like parts, and which:

### BRIEF DESCRIPTION OF THE DRAWINGS

Figure 1 is a perspective view of a window covering actuator, shown in one intended environment, with portions of the head rail cut away;
Figure 2 is a schematic elevational view of the motor in a position wherein maximum magnetic attraction exists between the rotor and braking magnet as schematically shown by the down arrow, showing the braking magnet and piezosensitive element and showing a graph of the signal that is generated by the piezosensitive element as the motor turns;
Figure 3 is a schematic elevational view of the motor in a position wherein minimum magnetic attraction exists between the rotor and braking magnet as schematically shown by the down arrow, showing a graph of the signal that is generated by the piezosensitive element as the motor turns;
Figure 4 is a view of an alternate embodiment wherein the piezosensitive element and braking magnet sense the rotation of a shaft that is connected to the motor rotor by a vibration damping member;
Figure 5 is a side view of another alternate embodiment wherein the piezosensitive element is placed behind the magnetic circuit;
Figure 6 is a perspective view of a switching-flux linear motor provided with a device according to the invention;
Figure 7 is a sectional view of the switching-flux linear motor; and
Figures 8A and 8B are schematic views of the switching-flux linear motor.

### DETAILED DESCRIPTION OF THE PREFERRED EMBODIMENT

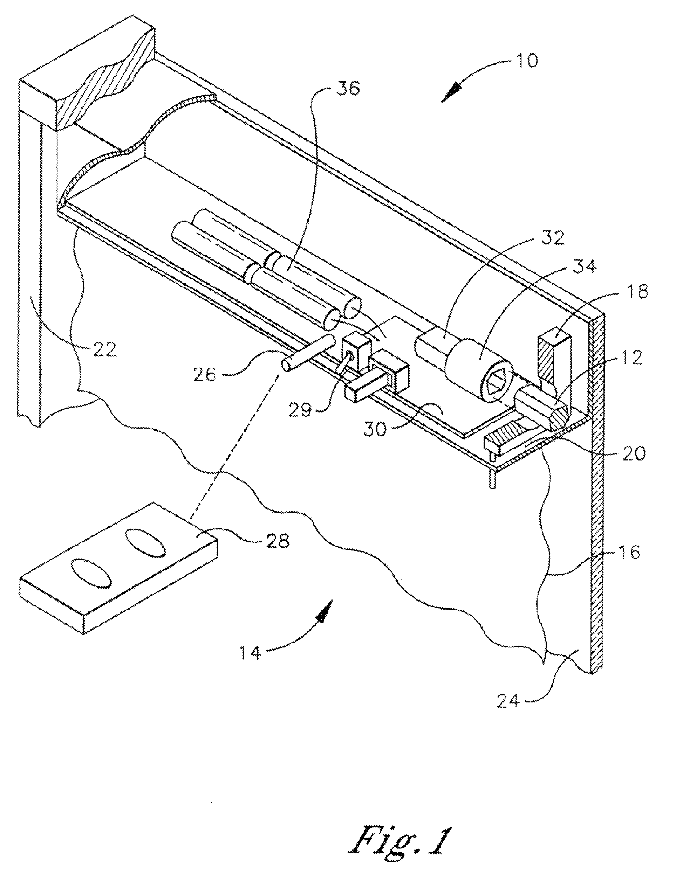

Referring initially to Figure 1, a motorized window covering is shown, generally designated 10, that includes an actuator such as a rotatable rod 12 of a window covering 14, such as but not limited to a shade assembly having raisable (by rolling up) and lowerable (by rolling down, or unrolling) shade 16. As shown, the tilt rod 12 is rotatably mounted by means of a block 18 in a head rail 20 of the window covering 14.

While a roll-up shade is shown, it is to be understood that the principles herein apply to a wide range of window coverings and other objects that are to be moved by motors. For example, the invention applies to raisable and lowerable pleated shades and cellular shades such as those commonly marketed under the trade names "Silhouette", "Shangri-La", etc. as well as to projector screens, awnings, etc. that can be raised and lowered. Moreover, while needed less in applications that require only tilting slats such as in horizontal blinds, the invention may also apply to these systems. Thus, for example, the rod 12 may be a roll-up rod of a shade, awning, or projector screen, or a tilt rod of a horizontal (or vertical) blind, or other like operator. It is thus to be further understood that the principles of the present invention apply to a wide range of window coverings and other objects including, but not limited to the following: vertical blinds, fold-up pleated shades, roll-up shades, cellular shades, skylight covers, etc. Powered versions of such shades are disclosed in U.S. Patent No. 6,433,498, incorporated herein by reference.

In the non-limiting illustrative embodiment shown, the window covering 14 is mounted on a window frame 22 to cover a window 24, and the rod 12 is rotatable about its longitudinal axis. The rod 12 can engage a user-manipulable baton (not shown). When the rod 12 is rotated about its longitudinal axis, the shade 16 raises or lowers between an open configuration and a closed configuration.

Figure 1 shows that the motorized window covering 10 can include a control signal receiver, preferably a signal sensor 26, for receiving a user command signal. Preferably, the user command signal is generated by a hand-held user command signal generator 28, which can be an infrared (IR) remote-control unit or a radio frequency (RF) remote-control unit. Or, the user command signal may be generated by any other means of communication well known in the art, such as by manipulable manual switches 29. The user command signals can include open, close, raise, lower, and so on.

An electronic circuit board 30 can be positioned in the head rail 20 and can be fastened to the head rail 20, e.g., by screws (not shown) or other well-known method. The preferred electronic circuit board 30 includes a microprocessor for processing the control signals. Also, the circuit board 30 includes appropriate signal conditioning circuitry for determining the position and/or speed and/or direction of rotation of the below-described motor as set forth further below.

Indeed, Figure 1 shows that a small, lightweight electric motor/encoder 32 is coupled to a gear enclosure 34, preferably by bolting the motor 32/encoder to the gear enclosure 34. The gear enclosure 34 is keyed to the rod 12, so that as the gears in the gear enclosure 34 turn, the rod 12 rotates.

It is to be understood that the motor/encoder 32 is electrically connected to the circuit board 30. To power the motor/encoder 32, one or more (four shown in Figure 1) primary dc batteries 36, such as type AA alkaline batteries or Lithium batteries, can be mounted in the head rail 20 and connected to the circuit board 30. Preferably, the batteries 36 are the sole source of power for the motor, although the present invention can also be applied to powered shades and other objects that are energized from the public ac power grid.

As set forth in the above-referenced U.S. Patent, a user can manipulate the signal generator 28 to generate a signal that is sensed by the signal sensor 26 and sent to signal processing circuitry in the circuit board 30. In turn, the electrical path between the batteries 34 and the motor/encoder 32 is closed to energize the motor 32 and move the window covering open or closed in accordance with the signal generated by the signal generator 28, under control of the processor on the electronic circuit board 30. As set forth further below, as the motor turns, the encoder portion generates a signal representative of the speed, direction, and position of the motor. When the motor is deenergized, the encoder portion advantageously brakes the motor from turning under the weight of the window covering 14.

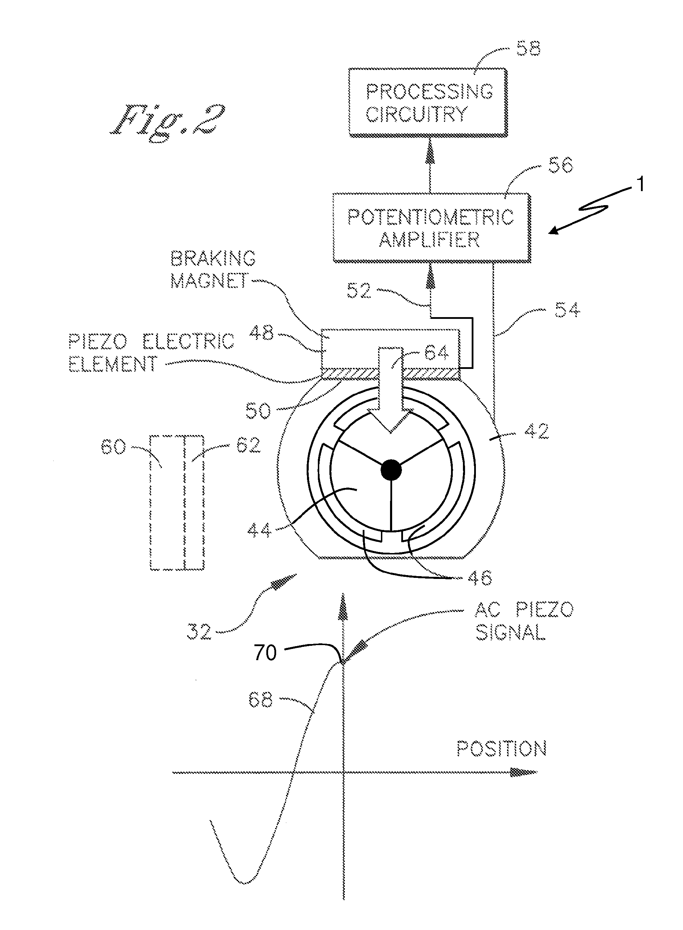

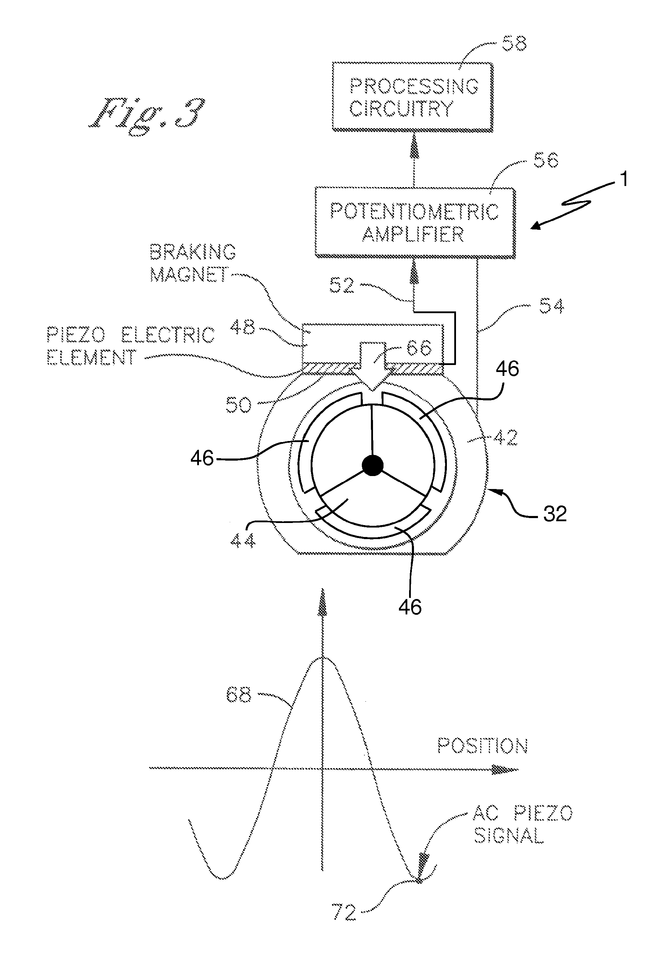

Now referring to Figures 2 and 3, in one non-limiting implementation the motor/encoder 32 includes a motor housing 42 inside of which a rotor 44 may rotate. The rotor 44 may have, e.g., three poles 46. A braking magnet 48 is closely juxtaposed with the motor such that as the poles of the rotor 44 rotate past the magnet 48, magnetic field lines are cut. The braking magnet 48 may be magnetically coupled to another stationary magnet or ferromagnetic object (not shown). Plural (e.g., three) magnets or ferromagnetic objects may be attached to the rotor as, e.g., rotor poles so that the reluctance of the coupling between the braking magnet 48 and the rotor 44 varies with rotation.

As intended by the present invention, a piezosensitive element 50 such as a disk-shaped piezosensitive element is interposed between the magnet 48 and rotor 44. In the embodiment shown, the piezosensitive element 50 is mounted on the outer surface of the motor housing 42 and the magnet 48 is mounted on the piezosensitive element 50. The piezosensitive element 50 may alternatively be mounted on the inside surface of the housing 42.

By "piezosensitive element", it must be understood any electrical component that allows generating an electrical signal resulting from the mechanical pressure or mechanical forces exerted on this element. The most direct piezosensitive elements use the direct piezoelectric effect, as produced by PZT ceramics or specific polymers as PVDF, with a direct generation of electrical charges. However piezosensitive elements may also be passive as resistors designed such as giving a pressure or force dependent resistance. This can be achieved by strain gauges technology and simpler by a thin porous polymer sandwiched between conducting plates. In case of passive elements, they will be connected to a voltage generator and the current will be analyzed to provide the signal.

Capacitor-like structures as electrets may also be used as piezosensitive elements.

The mechanical to electrical conversion may be produced by compression-, extension-, flexion-, torsion-, and bending-modes.

As shown in Figures 2 and 3, signals generated by the piezosensitive element 50 can be picked up by leads 52, 54 respectively connected to the magnet 48 and housing 42. The leads 52, 54 can be connected to a suitable circuit that can include, e.g., an amplifier 56, preferably configured potentiometrically, and digital or analog processing circuitry 58 that processes the signals in accordance with the disclosure below to determine the angular speed and position of the motor/encoder 32. If desired, as shown in phantom in Figure 2 a second magnet 60 with second piezosensitive element 62 can be mounted on the motor in quadrature with (offset 90 degrees from) the previously described piezosensitive element 50, for determining the direction of rotation of the motor if desired. Often, however, the direction of rotation is known a priori because the user command signals represent the desired direction of rotation by, e.g., indicating whether the window covering is to be opened or closed.

When a pole 46 is directly beneath the magnet 48 as shown in Figure 2, the magnetic coupling between the magnet 48 and rotor 44 is at a maximum, as indicated by the relatively large arrow 64. In contrast, when the two nearest poles 46 of the motor are equidistantly spaced from the magnet 48, the magnetic coupling between the magnet 48 and rotor 44 is at a minimum, as indicated by the relatively small arrow 66 in Figure 3. The variability of the magnetic coupling as the motor turns exerts a changing force on the piezosensitive element 50, causing it to generate a varying electrical signal.

This is illustrated by the graphs in Figures 2 and 3. As shown in Figures 2 and 3, a varying signal 68 is output by the piezosensitive element 50, with the signal 68 being sinusoidal and varying with rotor 44 position. Specifically, when the rotor 44 is in the position of maximum magnetic coupling shown in Figure 2, the signal 68 is at a positive peak 70, and when the rotor 44 is in the position of minimum magnetic coupling shown in Figure 3, the signal 68 is at a negative peak 72. The graphs accordingly show that the amplitude of the signal, which advantageously is substantially independent of motor speed, is correlated to position along the x-axis.

Thus, one-half wave of the signal 68 represents the angular distance between adjacent poles 46 of the rotor 44; the instantaneous amplitude of the signal 68 accordingly gives the instantaneous angular position relative to adjacent poles 46. The number of peaks can be counted UP or DOWN (depending on direction of rotation) to know the total angular displacement of the motor from an initialized value of zero, which value can be established by running the window covering to, e.g., fully closed and resetting the circuit to indicate a "zero" position. The speed of the motor can be determined from the frequency of the signal 68. One way to obtain the speed in revolutions per second is to count the time between positive peaks, multiply by three, and take the inverse of the product. To obtain the direction of rotation, the user command signal of "UP" or "DOWN" (equivalently, "OPEN" or "CLOSE") can be used. If the direction cannot be so obtained, the signal from the second piezosensitive element 62 can be used in conjunction with the signal from the first piezosensitive element 50 in accordance with quadrature principles known in the art to obtain the direction of rotation.

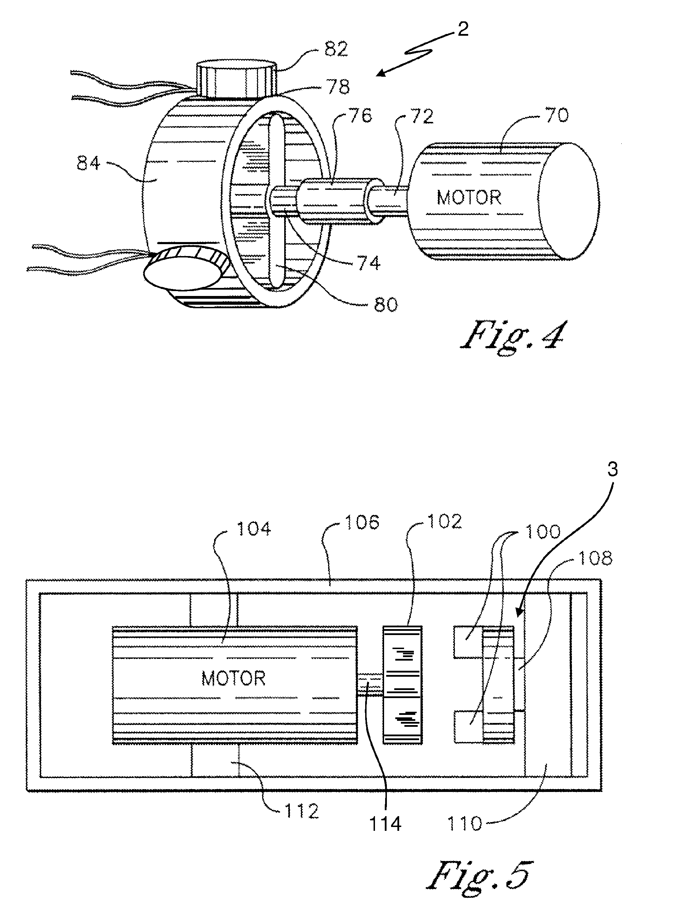

Figure 4 shows an alternate embodiment of a motor 70 that, instead of mounting the piezosensitive element on the motor housing (which can vibrate and hence induce noise in the output of the piezosensitive element), couples a rotor 72 of the motor 70 to a ferromagnetic shaft 74 using a vibration damping coupling 76 that can be as simple as a plastic tube which closely surrounds the shaft 74 and rotor 72. The shaft 74 can be made of soft or powdered iron. The piezosensitive element 78 is juxtaposed with the shaft. Particularly, the piezosensitive element 78 is sandwiched between additional poles 80 of the shaft 74 and a braking magnet 82 as shown, to function in accordance with principles set forth above to determine the position and speed of the motor 70. Specifically, the piezosensitive element 78 is mounted on a housing 84 that surrounds the shaft 74 and that is not connected to the motor housing.

Alternatively, the additional poles 80 constitute a breaking magnet and the breaking magnet 82 is replaced by a pole made with soft iron.

Figure 5 shows another alternate embodiment wherein magnets 100 are disposed in front of additional poles 102 on the shaft 114 of a motor 104 within a housing 106. The shape of the additional poles is similar to the one depicted on figure 4 with reference 80. A piezosensitive element 108 is separated from the magnets 100 by a plastic holder 110 within the housing 106. The motor 104 can be held by a holder 112 within the housing 106. The piezosensitive element 108 transfers the force of the magnets 100 to the housing 106. The force generated by the magnets 100 depends on the position of the shaft of the motor 104, and is at a maximum when they are aligned with the shaft. This force is directly sensed by the piezosensitive element 108, and as a consequence the output of the element 108 can be correlated to motor position and, hence, used to determine shaft rotational position. The output of the element 108 has two pulses per motor revolution. If desired, a second piezosensitive element can be juxtaposed in quadrature with the element 108 so that two outputs can be obtained for determining position, direction, and speed of rotation.

In all the previous embodiments, the piezosensitive element is stressed by the coupling. The invention also applies to embodiments where the piezosensitive element is distressed by the coupling.

The signals from the piezosensitive element 50 can be used to self-commute the motor when it is a brushless DC motor. In some instances, the magnets can be used to create the magnetic field in the motor, such as a linear motor.

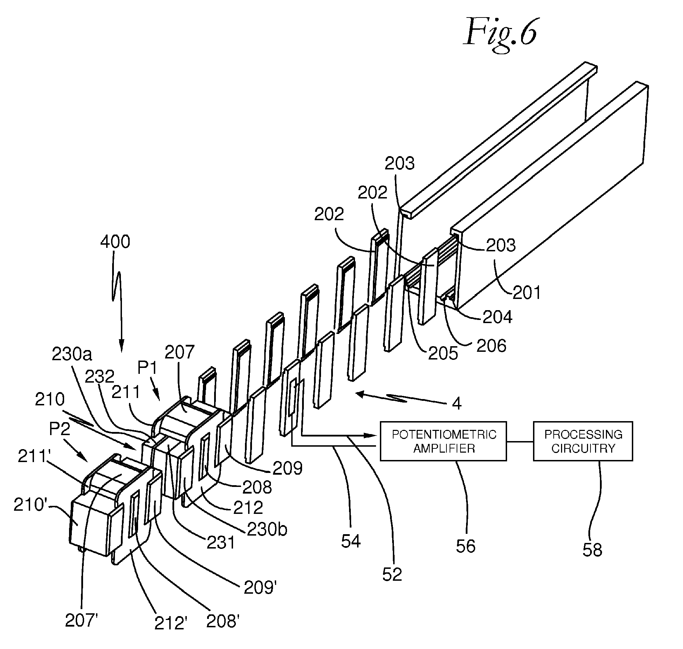

For instance, the invention may also apply to a flux-switching linear motor. Such a linear motor is described referring to Figures 6, 7, 8A and 8B.

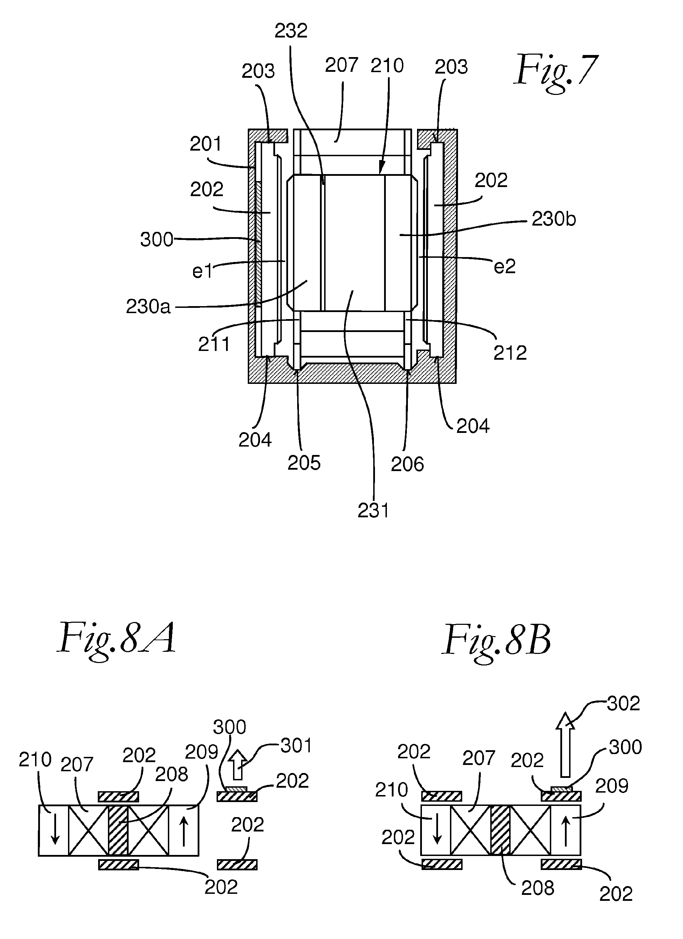

The motor comprises a stator tube 201 consisting of a U-profile amagnetic guidance member of rectangular section, made for example of aluminium. It serves merely as support to stator poles consisting of pads or of rectangular lugs 202 made of ferromagnetic material, soft steel for example. These pads 202 are fixed against the internal faces of the two parallel opposite legs of the U-profile member. At least some of these pads are fixed to the U-profile via piezosensitive elements 300 that are sandwiched between the pads and the U-profile as it can be seen in figure 7. For example, the piezosensitive elements are glued on the tube 201 and the pads are glued on the piezosensitive elements. The pads 202 are positioned pairwise, such that the two pads of a pair are situated one facing the other, symmetrically with respect to the axis of the tube 201. The successive pairs of pads 202 are equidistant and spaced apart by a distance defining the step of the motor. In its transverse wall, the tube 201 furthermore has two grooves 205 and 206 for guiding a sliding element 400, as will be described later. These grooves 205 and 206 may be coated in a material facilitating the sliding of the sliding element.

The sliding element 400 comprises two or three phases, such as the phase P1 and the phase P2 represented in figure 6 and figure 7, each of these phases consisting, in principle, of a coil 207 whose axis is perpendicular to the plane of the stator poles 202, this coil surrounding a core 208 made of magnetic material constituting an armature. Disposed on each side of the coil 207, along the axis of the tube 201, are two elements 209 and 210 magnetized in opposite directions parallel to the axis of the coil. Fixed at the two ends of the coil 207 are two rectangular flanges 211 and 212 made of amagnetic material, preferably of synthetic material, collaborating in the fixing of the magnetized elements 209 and 210. A two-phase sliding element consisting of two phases such as P1 juxtaposed and a three-phase sliding element consisting of three phases such as P1 juxtaposed.

As may be seen in figure 7, the sliding element is guided in the tube 201 by its two flanges 211 and 212 sliding in the grooves 205 and 206. The distance between the magnetized elements 209 and 210 or the core 208 and the stator poles 202 defines two gaps e1 and e2.

Figures 8A and 8B illustrate two positions of the sliding element in its movement relatively to the tube 201.

In a first position represented in figure 8A, the core 208 is situated between a pair of stator poles 202, the neighbouring pairs being situated at distances such that the magnetized elements 209 and 210 are not engaged between these neighbouring pairs. The magnetic fields of the two magnetized elements 209 and 210 tend to close up through the neighbouring stator poles 202 of the core 208 and through this core 208. The magnetized element 209 and the pole 202 bearing the piezosensitive element 300 are in a position of weak magnetic coupling. A relatively small arrow 301 represents this coupling.

In a second position of the sliding element, represented in figure 8B, the coil 207 is situated exactly midway between two pairs of stator poles 202, the magnetized element 209 being between the two stator poles 202 of one pair and the magnetized element 210 between the stator poles of the neighbouring pair. The magnetized element 209 and the pole 202 bearing the piezosensitive element 300 are in a position of strong magnetic coupling. A relatively large arrow 302 represents this coupling.

The variability of the magnetic coupling as the sliding element moves exerts a changing force on the piezosensitive element 300, causing it to generate a varying electrical signal.

Only some of the stator poles 202 may be provided with piezosensitive elements 300 (for example the poles at the end of the tube) in order to allow the detection of position of the sliding element when it is in some special positions (defined by the poles provided with piezosensitive elements).

Alternatively, all the poles fixed on a same lug of the tube (or for example, each second pole, or each third pole) may be provided with piezosensitive elements. This allows not only to detect the position of the sliding element but also to determine the speed and the direction of the sliding element in the tube.

Alternatively, three separate stripes of piezosensitive film are used, each of them being axially oriented and secured on the whole length of the U-profile, in a upper-, medium-, and lower-position.

All the poles fixed on a same lug of the tube (or for example, each second pole, or each third pole) may be provided with an upper-, medium- or lower-extension so that a pressure is exerted only on the upper stripe, or on the medium stripe, or on the lower stripe.

Alternatively a same piezosensitive polymer film is secured on the whole surface of at least one of the U-profile internal face, in order to get a signal variation frequency equal to the windings commutation frequency requested by the motor.

As shown in Figure 6, signals generated by the piezosensitive elements 300 can be picked up and processed by the same means as those described referring to figures 2 and 3.

Each magnetized element may consist of a permanent magnet 209. In alternate embodiments at least one of the magnetized elements of the sliding element 400 may comprise a piece of ferromagnetic material, a piezosensitive element and a permanent magnet, the piezosensitive element being sandwiched between the piece of ferromagnetic material and the permanent magnet.

In a preferred embodiment, at least one 210 of the magnetized elements of the sliding element 400 may comprise two pieces of ferromagnetic material 230a, 230b and a permanent magnet 231 sandwiched between the two pieces of ferromagnetic material 230a, 230b. It also comprises a piezosensitive element 232 sandwiched between a piece of ferromagnetic material 230a and the permanent magnet 231.

The variability of the magnetic coupling between the poles 202 and the magnetized element 210 as the sliding element moves exerts a changing force on the piezosensitive element 232, causing it to generate a varying electrical signal. This signal is used to control switching means for supplying the coils 207 of the sliding element.

The invention may apply to the electric power supply of any kind of linear or rotating brushless motor or any kind of linear or rotating flux-switching motor.

For rotating motors, the invention has been described in figures 2 to 5 by using an existing motor and a separate magnet. It is clear for the man skilled in the art that the embodiments described above for the linear motor also apply to a rotating motor by using at least one of the magnets included in the motor. In both situations, the piezosensitive element will be distressed in a position of maximum magnetic coupling.

For a rotating brushless motor, the frame is for instance the stator-frame of the rotating brushless motor and the movable member is the rotor of the rotating brushless motor. The rotor comprises at least a permanent magnet being the moving magnetic pole. The static magnetic pole is a pad made of ferromagnetic material secured on the stator-frame.

According to the type of rotating motor it may be useful to get the signal on the stator side or on the rotor side, exactly as depicted in the linear motor case. In the first case the piezosensitive element is sandwiched between the static magnetic pole and the frame (in the same way as the element 300), and in the second case the piezosensitive element is located in the rotor and sandwiched between the permanent magnet and a piece of ferromagnetic material (in the same way as the element 232).

## Claims

1. A DC motor (32) including a motor housing (42) inside of which a rotor (44) may rotate and a braking magnet (48) and being closely juxtaposed with the motor such that the rotor and the braking magnet are magnetically coupled.

2. The DC motor of claim 1, wherein the braking magnet is further magnetically coupled to another stationary magnet.

3. The DC motor of claim 1, wherein the braking magnet is further magnetically coupled to a ferromagnetic element.

4. The DC motor of claim 1, wherein the reluctance of the coupling between the braking magnet and the rotor varies with rotation.

5. A powered assembly (10) comprising:
- a DC motor (32) according to one of claims 1 to 3,
- an object (16) that can be moved between a first configuration and a second configuration,
- an actuator (12) coupled to the motor and the object to move the object when the motor is energized.

6. The powered assembly according to claim 5, wherein the object is selected from the group consisting of window coverings, awnings, skylight coverings, curtains, and screens.

7. A method comprising the following steps:
- providing a DC motor,
- closely juxtaposing at least one braking magnet with the DC motor such that the rotor and the braking magnet are magnetically coupled.

8. The method according to claim 7, which comprises the following steps :
- using an existing motor and a separate magnet.

9. The method according to claim 7, which comprises the following step:
- coupling the DC motor to an object such that the object is moved when the motor is energized.
